# EUROPEAN PATENT SPECIFICATION

(11) **EP 3 501 785 B1**
(45) Date of publication and mention of the grant of the patent: **26.01.2022**
(21) Application number: 19154277.8
(22) Date of filing: 17.11.2015
(51) Int. Cl.: B29C 48/42, B29C 48/76, B29B 17/00, B29C 48/00, B29C 48/60, B29L 31/00, B29K 67/00

(54) **METHODS FOR MANUFACTURING BULKED CONTINUOUS FILAMENT**
VERFAHREN ZUR MASSENHERSTELLUNG VON ENDLOSFILAMENTEN
PROCÉDÉS DE FABRICATION DE FILAMENT CONTINU GONFLANT

(30) Priority: 18.11.2014 US 201414546819
(43) Date of publication of application: 26.06.2019
(62) Divisional of application: 15860981.8
(73) Proprietor: Aladdin Manufacturing Corporation, Calhoun, GA 30701 (US)
(72) Inventor: CLARK, Thomas R., Chattanooga, TN 37415 (US)
(74) Representative: Vande Ginste, Kristof Omer

(56) References cited:
- US-A1- 2009 039 542
- US-B1- 6 784 214
- US-B1- 8 597 553
- JAECKER M: "DAS KONISCHE KONZEPT DER ZUKUNFT//VORTEILE DER NEGATIV-KONISCHEN GANGTIEFE BEI DOPPELSCHNECKENEXTRUDERN", KUNSTSTOFFE, CARL HANSER VERLAG, MUNCHEN, DE, vol. 90, no. 12, 1 December 2000 (2000-12-01), page 64,66, XP000976101, ISSN: 0023-5563

## Description

### BACKGROUND

Because pure virgin PET polymer is more expensive than recycled PET polymer, and because of the environmental benefits associated with using recycled polymer, it would be desirable to be able to produce bulked continuous carpet filament from 100% recycled PET polymer (e.g., PET polymer from post-consumer PET bottles).

US 8 597 553 which is regarded as the closest prior art, discloses a method for manufacturing bulked continuous filaments from recycled PET polymer, wherein the method comprises a step wherein the PET bottles are grinded, a step of washing the obtained flakes, a step of using an extrusion system to melt and purify the PET flakes and a step of spinning the purified PET polymer into bulked continuous filaments.

### SUMMARY

The present invention is defined in the claims and concerns a method according to claim 1 of manufacturing carpet filament, wherein the method comprises the steps of: (A) grinding a plurality of recycled PET bottles into a group of polymer flakes; (B) washing the group of polymer flakes to remove at least a portion of one or more contaminants from a surface of the flakes, the group of flakes comprising a first plurality of flakes that consist essentially of PET and a second plurality of flakes that do not consist essentially of PET; (C) after the step of washing the first plurality of flakes: (i) scanning the washed group of flakes to identify the second plurality of flakes, and (ii) separating the second plurality of flakes from the first plurality of flakes; (D) providing an expanded surface area extruder having an extruder inlet and an extruder outlet; (E) providing a pressure regulation system configured to reduce a pressure within the expanded surface area extruder between about 0 mbar and about 5 mbar; (F) providing a spinning machine having a spinning machine inlet, wherein the spinning machine inlet is directly coupled to the extruder outlet; (G) using the pressure regulation system to reduce the pressure within the expanded surface area extruder between about 0 mbar and about 5 mbar; (H) while maintaining the pressure within the expanded surface area extruder between about 0 mbar about 5 mbar, passing the second plurality of flakes through the expanded surface area extruder via the first inlet; (I) melting the second plurality of flakes using the expanded surface area extruder to produce a polymer melt; and (J) substantially immediately after passing the second plurality of flakes through the expanded surface area extruder, spinning the polymer melt into bulked continuous carpet filament using the spinning machine, characterized in that said method further comprises providing a PET crystallizer, wherein the PET crystallizer comprises one or more heating elements and one or more blowers configured to blow air that has been heated by the one or more heating elements over the second plurality of flakes as the second plurality of flakes pass through the crystallizer; and prior to passing said second plurality of flakes through said expanded surface area extruder, passing said second plurality of flakes through said PET crystallizer to at least partially dry a surface of said second plurality of flakes, wherein the one or more blowers are moving air substantially across a surface area of the second plurality of flakes as the second plurality of flakes passes through the crystallizer.

### BRIEF DESCRIPTION OF THE DRAWINGS

Having described various embodiments in general terms, reference will now be made to the accompanying drawings, which are not necessarily drawn to scale, and wherein:

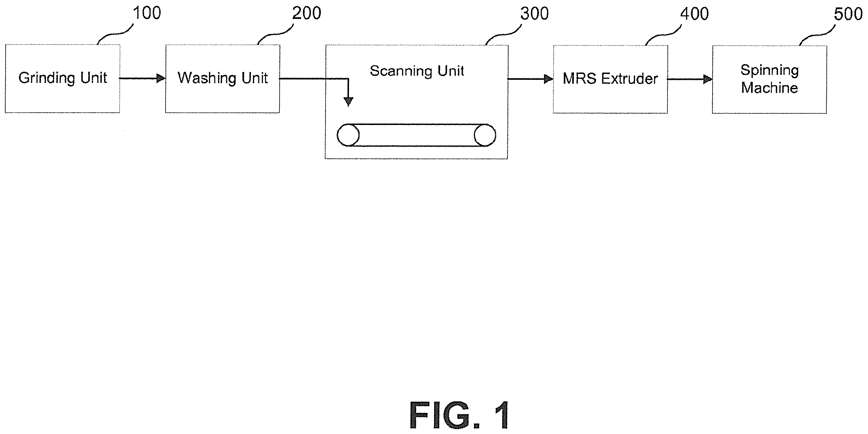

FIG. 1 depicts a process flow, according to a particular embodiment, for manufacturing bulked continuous carpet filament.
FIG. 2 is a perspective view of an MRS extruder that is suitable for use in the process of FIG. 1.
FIG. 3 is a cross-sectional view of an exemplary MRS section of the MRS extruder of FIG. 2.
FIG. 4 depicts a process flow depicting the flow of polymer through an MRS extruder and filtration system according to a particular embodiment.
FIG. 5 is a high-level flow chart of a method, according to various embodiments, of manufacturing bulked continuous carpet filament.

### DETAILED DESCRIPTION OF VARIOUS EMBODIMENTS

Various embodiments will now be described in greater detail. Like numbers refer to like elements throughout.

### I. Overview

New processes for making fiber from recycled polymer (e.g., recycled PET polymer) are described below. In various embodiments, this new process: (1) is more effective than earlier processes in removing contaminates and water from the recycled polymer; and/or (2) does not require the polymer to be melted and cooled as many times as in earlier processes. In at least one embodiment, the improved process results in a recycled PET polymer having a polymer quality that is high enough that the PET polymer may be used in producing bulked continuous carpet filament from 100% recycled PET content (e.g., 100% from PET obtained from previously used PET bottles). In particular embodiments, the recycled PET polymer has an intrinsic viscosity of at least about 0.79 dL/g (e.g., of between about 0.79 dL/g and about 1.00 dL/g).

### II. More Detailed Discussion

A BCF (bulked continuous filament) manufacturing process, according to a particular embodiment, may generally be broken down into three steps: (1) preparing flakes of PET polymer from post-consumer bottles for use in the process; (2) passing the flakes through an extruder that melts the flakes and purifies the resulting PET polymer; and (3) feeding the purified polymer into a spinning machine that turns the polymer into filament for use in manufacturing carpets. These three steps are described in greater detail below.

### STEP 1: Preparing Flakes of PET Polymer from Post-Consumer Bottles

In a particular embodiment, the step of preparing flakes of PET polymer from post-consumer bottles comprises: (A) sorting post-consumer PET bottles and grinding the bottles into flakes; (B) washing the flakes; and (C) identifying and removing any impurities or impure flakes.

### A. Sorting Post-Consumer PET bottles and Grinding the Bottles into Flakes

In particular embodiments, bales of clear and mixed colored recycled post-consumer (e.g., "curbside") PET bottles (or other containers) obtained from various recycling facilities make-up the post-consumer PET containers for use in the process. In other embodiments, the source of the post-consumer PET containers may be returned 'deposit' bottles (e.g., PET bottles whose price includes a deposit that is returned to a customer when the customer returns the bottle after consuming the bottle's contents). The curbside or returned "post-consumer" or "recycled" containers may contain a small level of non-PET contaminates. The contaminants in the containers may include, for example, non-PET polymeric contaminants (e.g., PVC, PLA, PP, PE, PS, PA, etc.), metal (e.g., ferrous and non-ferrous metal), paper, cardboard, sand, glass or other unwanted materials that may find their way into the collection of recycled PET. The non-PET contaminants may be removed from the desired PET components, for example, through one or more of the various processes described below.

In particular embodiments, smaller components and debris (e.g., components and debris greater than 2 inches in size) are removed from the whole bottles via a rotating trammel. Various metal removal magnets and eddy current systems may be incorporated into the process to remove any metal contaminants. Near Infra-Red optical sorting equipment such as the NRT Multi Sort IR machine from Bulk Handling Systems Company of Eugene, Oregon, or the Spyder IR machine from National Recovery Technologies of Nashville, Tennessee, may be utilized to remove any loose polymeric contaminants that may be mixed in with the PET flakes (e.g., PVC, PLA, PP, PE, PS, and PA). Additionally, automated X-ray sorting equipment such as a VINYLCYCLE machine from National Recovery Technologies of Nashville, Tennessee may be utilized to remove remaining PVC contaminants.

In particular embodiments, a binary segregation of the clear materials from the colored materials is achieved using automated color sorting equipment equipped with a camera detection system (e.g., an Multisort ES machine from National Recovery Technologies of Nashville, Tennessee). In various embodiments, manual sorters are stationed at various points on the line to remove contaminants not removed by the sorter and any colored bottles. In particular embodiments, the sorted material is taken through a granulation step (e.g., using a 50B Granulator machine from Cumberland Engineering Corporation of New Berlin, Wisconsin) to size reduce (e.g., grind) the bottles down to a size of less than one half of an inch. In various embodiments, the bottle labels are removed from the resultant "dirty flake" (e.g., the PET flakes formed during the granulation step) via an air separation system prior to entering the wash process.

### B. Washing the Flakes

In particular embodiments, the "dirty flake" is then mixed into a series of wash tanks. As part of the wash process, in various embodiments, an aqueous density separation is utilized to separate the olefin bottle caps (which may, for example, be present in the "dirty flake" as remnants from recycled PET bottles) from the higher specific gravity PET flakes. In particular embodiments, the flakes are washed in a heated caustic bath to about 190 degrees Fahrenheit (87,7778°C). In particular embodiments, the caustic bath is maintained at a concentration of between about 0.6% and about 1.2% sodium hydroxide. In various embodiments, soap surfactants as well as defoaming agents are added to the caustic bath, for example, to further increase the separation and cleaning of the flakes. A double rinse system then washes the caustic from the flakes.

In various embodiments, the flake is centrifugally dewatered and then dried with hot air to at least substantially remove any surface moisture. The resultant "clean flake" is then processed through an electrostatic separation system (e.g., an electrostatic separator from Carpco, Inc. of Jacksonville, Florida) and a flake metal detection system (e.g., an MSS Metal Sorting System) to further remove any metal contaminants that remain in the flake. In particular embodiments, an air separation step removes any remaining label from the clean flake. In various embodiments, the flake is then taken through a flake color sorting step (e.g., using an OPTIMIX machine from TSM Control Systems of Dundalk, Ireland) to remove any remaining color contaminants remaining in the flake. In various embodiments, an electro-optical flake sorter based at least in part on Raman technology (e.g., a Powersort 200 from Unisensor Sensorsysteme GmbH of Karlsruhe, Germany) performs the final polymer separation to remove any non-PET polymers remaining in the flake. This step may also further remove any remaining metal contaminants and color contaminants.

In various embodiments, the combination of these steps delivers substantially clean (e.g., clean) PET bottle flake comprising less than about 50 parts per million PVC (e.g., 25 ppm PVC) and less than about 15 parts per million metals for use in the downstream extrusion process described below.

### C. Identifying and Removing Impurities and Impure Flakes

In particular embodiments, after the flakes are washed, they are fed down a conveyor and scanned with a high-speed laser system **300.** In various embodiments, particular lasers that make up the high-speed laser system **300** are configured to detect the presence of particular contaminates (e.g., PVC or Aluminum). Flakes that are identified as not consisting essentially of PET may be blown from the main stream of flakes with air jets. In various embodiments, the resulting level of non-PET flakes is less than 25 ppm.

In various embodiments, the system is adapted to ensure that the PET polymer being processed into filament is substantially free of water (e.g., entirely free of water). In a particular embodiment, the flakes are placed into a pre-conditioner for between about 20 and about 40 minutes (e.g., about 30 minutes) during which the pre-conditioner blows the surface water off of the flakes. In particular embodiments, interstitial water remains within the flakes. In various embodiments, these "wet" flakes (e.g., flakes comprising interstitial water) may then be fed into an extruder (e.g., as described in Step 2 below), which includes a vacuum setup designed to remove - among other things - the interstitial water that remains present in the flakes following the quick-drying process described above.

### STEP 2: Using an Extrusion System to Melt and Purify PET Flakes

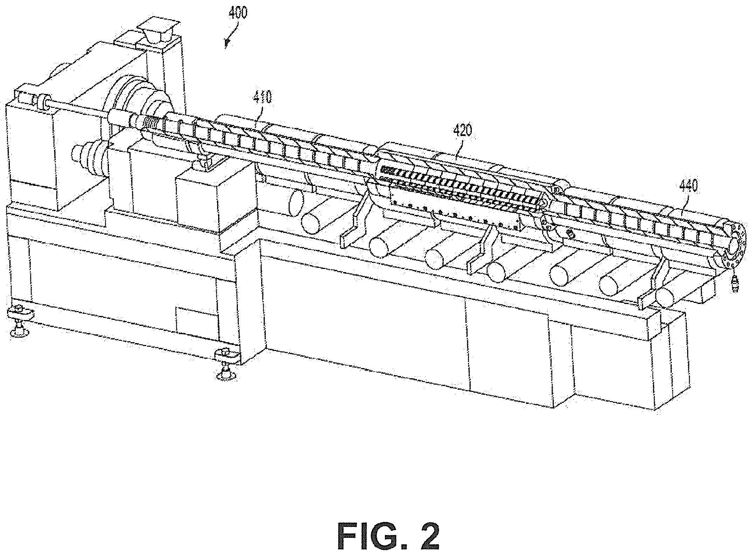

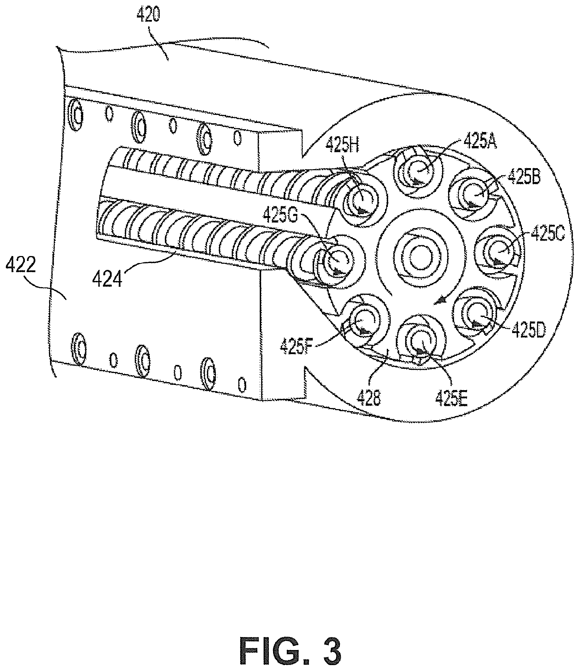

In particular embodiments, an extruder is used to turn the wet flakes described above into a molten recycled PET polymer and to perform a number of purification processes to prepare the polymer to be turned into BCF for carpet. As noted above, in various embodiments, after STEP 1 is complete, the recycled PET polymer flakes are wet (e.g., surface water is substantially removed (e.g., fully removed) from the flakes, but interstitial water remains in the flakes). In particular embodiments, these wet flakes are fed into a Multiple Rotating Screw ("MRS") extruder **400.** In other embodiments, the wet flakes are fed into any other suitable extruder (e.g., a twin screw extruder, a multiple screw extruder, a planetary extruder, or any other suitable extrusion system). An exemplary MRS Extruder **400** is shown in Figures 2 and 3. A particular example of such an MRS extruder is described in U.S. Published Patent Application 2005/0047267, entitled "Extruder for Producing Molten Plastic Materials", which was published on March 3, 2005, and which is hereby incorporated herein by reference.

As may be understood from this figure, in particular embodiments, the MRS extruder includes a first single-screw extruder section **410** for feeding material into an MRS section **420** and a second single-screw extruder section **440** for transporting material away from the MRS section.

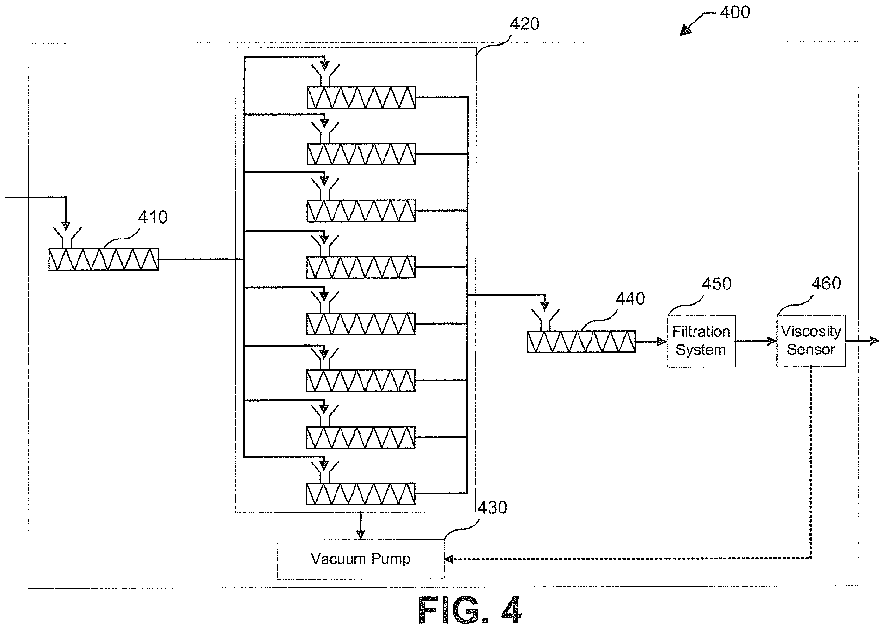

Figure 4 depicts a process flow that illustrates the various processes performed by the MRS Extruder **400** in a particular embodiment. In the embodiment shown in this figure, the wet flakes are first fed through the MRS extruder's first single-screw extruder section **410,** which may, for example, generate sufficient heat (e.g., via shearing) to at least substantially melt (e.g., melt) the wet flakes.

The resultant polymer melt (e.g., comprising the melted flakes), in various embodiments, is then fed into the extruder's MRS section **420,** in which the extruder separates the melt flow into a plurality of different streams (e.g., 4, 6, 8, or more streams) through a plurality of open chambers. Figure 3 shows a detailed cutaway view of an MRS Section **420** according to a particular embodiment. In particular embodiments, such as the embodiment shown in this figure, the MRS Section **420** separates the melt flow into eight different streams, which are subsequently fed through eight satellite screws **425A-H.** As may be understood from Figure 2, in particular embodiments, these satellite screws are substantially parallel (e.g., parallel) to one other and to a primary screw axis of the MRS Machine **400.**

In the MRS section **420,** in various embodiments, the satellite screws **425A-H** may, for example, rotate faster than (e.g., about four times faster than) in previous systems. As shown in Figure 3, in particular embodiments: (1) the satellite screws **425A-H** are arranged within a single screw drum **428** that is mounted to rotate about its central axis; and (2) the satellite screws **425A-H** are configured to rotate in a direction that is opposite to the direction in which the single screw drum rotates **428.** In various other embodiments, the satellite screws **425A-H** and the single screw drum **428** rotate in the same direction. In particular embodiments, the rotation of the satellite screws **425A-H** is driven by a ring gear. Also, in various embodiments, the single screw drum **428** rotates about four times faster than each individual satellite screw **425A-H.** In certain embodiments, the satellite screws **425A-H** rotate at substantially similar (e.g., the same) speeds.

In various embodiments, as may be understood from Figure 4, the satellite screws **425AH** are housed within respective extruder barrels, which may, for example be about 30% open to the outer chamber of the MRS section **420.** In particular embodiments, the rotation of the satellite screws **425A-H** and single screw drum **428** increases the surface exchange of the polymer melt (e.g., exposes more surface area of the melted polymer to the open chamber than in previous systems). In various embodiments, the MRS section **420** creates a melt surface area that is, for example, between about twenty and about thirty times greater than the melt surface area created by a co-rotating twin screw extruder. In a particular embodiment, the MRS section **420** creates a melt surface area that is, for example, about twenty five times greater than the melt surface area created by a co-rotating twin screw extruder

In various embodiments, the MRS extruder's MRS Section **420** is fitted with a Vacuum Pump **430** that is attached to a vacuum attachment portion **422** of the MRS section **420** so that the Vacuum Pump **430** is in communication with the interior of the MRS section via a suitable opening **424** in the MRS section's housing. In still other embodiments, the MRS Section **420** is fitted with a series of Vacuum Pumps. In particular embodiments, the Vacuum Pump **430** is configured to reduce the pressure within the interior of the MRS Section **420** to a pressure that is between about 0.5 millibars and about 5 millibars. In particular embodiments, the Vacuum Pump **430** is configured to reduce the pressure in the MRS Section **420** to less than about 1.5 millibars (e.g., about 1 millibar or less). The low-pressure vacuum created by the Vacuum Pump **430** in the MRS Section **420** may remove, for example: (1) volatile organics present in the melted polymer as the melted polymer passes through the MRS Section **420;** and/or (2) at least a portion of any interstitial water that was present in the wet flakes when the wet flakes entered the MRS Extruder **400.** In various embodiments, the low-pressure vacuum removes substantially all (e.g., all) of the water and contaminants from the polymer stream.

In a particular example, the Vacuum Pump **430** comprises three mechanical lobe vacuum pumps (e.g., arranged in series) to reduce the pressure in the chamber to a suitable level (e.g., to a pressure of about 1.0 millibar). In other embodiments, rather than the three mechanical lobe vacuum pump arrangement discussed above, the Vacuum Pump **430** includes a jet vacuum pump fit to the MRS extruder. In various embodiments, the jet vacuum pump is configured to achieve about 1 millibar of pressure in the interior of the MRS section **420** and about the same results described above regarding a resulting intrinsic viscosity of the polymer melt. In various embodiments, using a jet vacuum pump can be advantageous because jet vacuum pumps are steam powered and therefore substantially self-cleaning (e.g., self-cleaning), thereby reducing the maintenance required in comparison to mechanical lobe pumps (which may, for example, require repeated cleaning due to volatiles coming off and condensing on the lobes of the pump). In a particular embodiment, the Vacuum Pump **430** is a jet vacuum pump is made by Arpuma GmbH of Bergheim, Germany.

In particular embodiments, after the molten polymer is run the through the multi-stream MRS Section **420,** the streams of molten polymer are recombined and flow into the MRS extruder's second single screw section **440.** In various embodiments, the single stream of molten polymer is next run through a filtration system **450** that includes at least one filter. In a particular embodiment, the filtration system **450** includes two levels of filtration (e.g., a 40 micron screen filter followed by a 25 micron screen filter). Although, in various embodiments, water and volatile organic impurities are removed during the vacuum process as discussed above, particulate contaminates such as, for example, aluminum particles, sand, dirt, and other contaminants may remain in the polymer melt. Thus, this filtration step may be advantageous in removing particulate contaminates (e.g., particulate contaminates that were not removed in the MRS Section **420).**

In particular embodiments, a viscosity sensor **460** (see Figure 4) is used to sense the melt viscosity of the molten polymer stream following its passage through the filtration system **450.** In various embodiments, the viscosity sensor **460,** measures the melt viscosity of the stream, for example, by measuring the stream's pressure drop across a known area. In particular embodiments, in response to measuring an intrinsic viscosity of the stream that is below a predetermined level (e.g., below about 0.8 g/dL), the system may: (1) discard the portion of the stream with low intrinsic viscosity; and/or (2) lower the pressure in the MRS Section **420** in order to achieve a higher intrinsic viscosity in the polymer melt. In particular embodiments, decreasing the pressure in the MRS Section **420** is executed in a substantially automated manner (e.g., automatically) using the viscosity sensor in a computer-controlled feedback control loop with the vacuum section **430.**

In particular embodiments, removing the water and contaminates from the polymer improves the intrinsic viscosity of the recycled PET polymer by allowing polymer chains in the polymer to reconnect and extend the chain length. In particular embodiments, following its passage through the MRS Section **420** with its attached Vacuum Pump **430,** the recycled polymer melt has an intrinsic viscosity of at least about 0.79 dL/g (e.g., of between about 0.79 dL/g and about 1.00 dL/g). In particular embodiments, passage through the low pressure MRS Section **420** purifies the recycled polymer melt (e.g., by removing the contaminants and interstitial water) and makes the recycled polymer substantially structurally similar to (e.g., structurally the same as) pure virgin PET polymer. In particular embodiments, the water removed by the vacuum includes both water from the wash water used to clean the recycled PET bottles as described above, as well as from unreacted water generated by the melting of the PET polymer in the single screw heater **410** (e.g., interstitial water). In particular embodiments, the majority of water present in the polymer is wash water, but some percentage may be unreacted water.

In particular embodiments, the resulting polymer is a recycled PET polymer (e.g., obtained 100% from post-consumer PET products, such as PET bottles or containers) having a polymer quality that is suitable for use in producing PET carpet filament using substantially only (e.g., only) PET from recycled PET products.

### Step 3: Purified PET Polymer Fed into Spinning Machine to be Turned into Carpet Yarn

After the recycled PET polymer has been extruded and purified by the above-described extrusion process, the resulting molten recycled PET polymer is fed directly into a BCF (or "spinning") machine 500 that is configured to turn the molten polymer into bulked continuous filament. Accordingly, the output of the MRS extruder **400** is connected substantially directly (e.g., directly) to the input of the spinning machine **500** so that molten polymer from the extruder is fed directly into the spinning machine **500.** This process is advantageous because molten polymer does not need to be cooled into pellets after extrusion (as it would need to be if the recycled polymer were being mixed with virgin PET polymer). Not cooling the recycled molten polymer into pellets serves to avoid potential chain scission in the polymer that might lower the polymer's intrinsic viscosity.

In particular embodiments, the spinning machine **500** extrudes molten polymer through small holes in a spinneret in order to produce carpet yarn filament from the polymer. In particular embodiments, the molten recycled PET polymer cools after leaving the spinneret. The carpet yarn is then taken up by rollers and ultimately turned into filaments that are used to produce carpet. In various embodiments, the carpet yarn produced by the spinning machine **500** may have a tenacity between about 3 gram-force per unit denier (gf/den) (0,26478 N/tex) and about 9 gf/den (0,79435 N/tex). In particular embodiments, the resulting carpet yarn has a tenacity of at least about 3 gf/den (0,26478 N/tex).

In particular embodiments, the spinning machine **500** used in the process described above is the Sytec One spinning machine manufactured by Oerlika Neumag of Neumuenster, Germany. The Sytec One machine may be especially adapted for hard-to-run fibers, such as nylon or solution-dyed fibers, where the filaments are prone to breakage during processing. In various embodiments, the Sytec One machine keeps the runs downstream of the spinneret as straight as possible, uses only one threadline, and is designed to be quick to rethread when there are filament breaks.

Although the example described above describes using the Sytec One spinning machine to produce carpet yarn filament from the polymer, it should be understood that any other suitable spinning machine may be used. Such spinning machines may include, for example, any suitable one-threadline or three-threadline spinning machine made by Oerlika Neumag of Neumuenster, Germany or any other company.

In various embodiments, the improved strength of the recycled PET polymer generated using the process above allows it to be run at higher speeds through the spinning machine **500** than would be possible using pure virgin PET polymer. This may allow for higher processing speeds than are possible when using virgin PET polymer.

### Summary of Exemplary Process

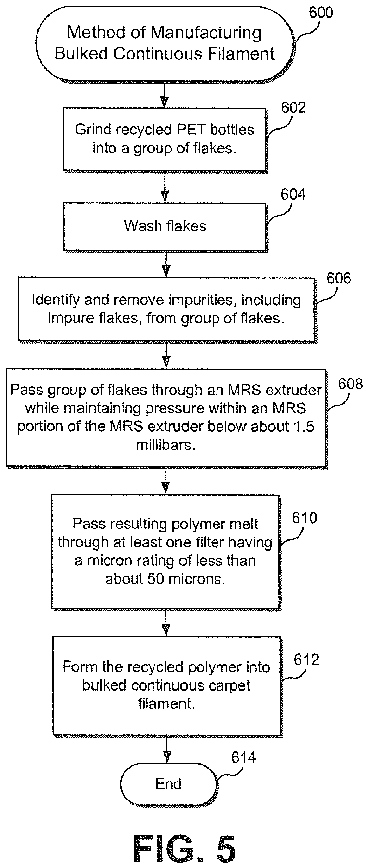

Figure 5 provides a high-level summary of a method of manufacturing bulked continuous filament described above. As shown in the figure, the method begins at Step **602,** where recycled PET bottles are ground into a group of flakes. Next, at Step **604,** the group of flakes is washed to remove contaminants from the flakes' respective outer surfaces. Next, at Step **606,** the group of flakes is scanned (e.g., using one or more of the methods discussed above) to identify impurities, including impure flakes. These impurities, and impure flakes, are then removed from the group of flakes.

Next, at Step **608,** the group of flakes is passed through an MRS extruder while maintaining the pressure within an MRS portion of the extruder below about 1.5 millibars. At Step **610,** the resulting polymer melt may be passed through at least one filter having a micron rating of less than about 50 microns. Finally, at Step **612,** the recycled polymer is formed into bulked continuous carpet filament, which may be used in producing carpet. The method then ends at Step **614.**

### Alternative Embodiments

In particular embodiments, the system may comprise alternative components or perform alternative processes in order to produce substantially continuous BCF from 100% recycled PET, or other recycled polymer. Exemplary alternatives are discussed below.

### Non-MRS Extrusion System

In particular embodiments, the process may utilize a polymer flow extrusion system other than the MRS Extruder described above. The alternative extrusion system may include for example, a twin screw extruder, a multiple screw extruder, a planetary extruder, or any other suitable extrusion system. In a particular embodiment, the process may include a plurality of any combination of any suitable conical screw extruders (e.g., four twin screw extruders, three multiple screw extruders, etc.).

### Making Carpet Yarn from 100% Recycled Carpet

In particular embodiments, the process described above may be adapted for processing and preparing old carpet (or any other suitable post-consumer product) to produce new carpet yarn comprising 100% recycled carpet. In such embodiments, the process would begin by grinding and washing recycled carpet rather than recycled PET bottles. In various embodiments where old carpet is converted into new carpet yarn comprising 100% recycled carpet, the process may comprise additional steps to remove additional materials or impurities that may be present in recycled carpet that may not be present in recycled PET bottles (e.g., carpet backing, adhesive, etc.).

### Other Sources of Recycled PET

In various embodiments, the process described above is adapted for processing recycled PET from any suitable source (e.g., sources other than recycled bottles or carpet) to produce new carpet yarn comprising 100% recycled PET.

### The Use of a Crystallizer as Part of BCF Process

The process for producing recycled BCF further includes a crystallizing step that utilizes one or more PET crystallizers. The system is configured to perform the crystallization step on the ground flakes prior to running the flakes through the one or more extruders (e.g., single screw extruder, MRS extruder, etc.). In particular embodiments, the PET crystallizer comprises a housing, a hopper screw (e.g., an auger) disposed at least partially within the housing, a stirring apparatus , one or more heating elements , and one or more blowers, wherein the invention requires at least one or more heating elements and one or more blowers.

### Hopper Screw

In particular embodiments, the hopper screw comprises any suitable screw conveyor (e.g., such as an Archimedes' screw) for moving liquid or granular materials (e.g., such as PET flakes). In various embodiments, the hopper screw comprises a substantially cylindrical shaft and a helical screw blade disposed along at least a portion of the cylindrical shaft. In particular embodiments, the substantially cylindrical shaft is configured to rotate the screw blade, causing that hopper screw to move material (e.g., the PET flakes) along the cylindrical shaft and into the crystallizer housing. In other embodiments, the hopper screw comprises any other suitable screw conveyer such as, for example, a shaftless spiral. In embodiments in which the hopper screw comprises a shaftless spiral, the shaftless spiral may be substantially fixed at one end and free at the other end and configured to be driven at the fixed end. In various embodiments, the hopper screw is disposed at least partially within the crystallizer housing.

In various embodiments, the hopper screw is configured to feed PET flakes into the crystallizer. In various embodiments, the PET crystallizer is configured to feed the PET flakes into the crystallizer using the hopper screw relatively slowly.

### One or More Heating Elements

The crystallizer comprises one or more heating elements for raising a temperature within the crystallizer. In particular embodiments, the one or more heating elements comprise one or more electric heating elements, one or more gas-fired heating elements, or any other suitable heating elements. In some embodiments, the one or more heating elements may be substantially electrically powered. In various embodiments, the one or more heating elements comprise one or more infra-red heating elements. In other embodiments, the one or more heating elements may utilize natural gas such, for example, propane. In particular embodiments, the one or more heating elements are configured to raise a temperature within the crystallizer to between about 100 degrees Fahrenheit (37,7778°C) and about 180 degrees Fahrenheit (82,2222°C). In still other embodiments, the one or more heating elements are configured to raise a temperature within the crystallizer to between about 100 degrees Celsius and 180 degrees Celsius. In some embodiments, the one or more heating elements are configured to maintain a temperature within the crystallizer that is substantially about a maximum crystallization temperature of PET. In particular embodiments, the maximum crystallization temperature of PET is between about 140 degrees Celsius and about 230 degrees Celsius.

### One or More Blowers

The crystallizer further comprises one or more blowers configured to blow air over the flakes as the flakes passes through the crystallizer. In particular embodiments, the one or more blowers comprise any suitable blowers for moving air substantially across a surface area of the flakes as the flakes pass through the crystallizer. For example, in some embodiments, the one or more blowers comprise one or more suitable fans or other suitable mechanisms for moving air. The one or more blowers are configured to blow air that has been at least partially heated by the one or more heating elements. In particular embodiments, the one or more blowers are configured to blow air having a temperature of at least about 140 degree Fahrenheit (60°C). In another particular embodiments, the one or more blowers are configured to blow air having a temperature of at least about 140 degree Celsius. In other embodiments, the one or more blowers are configured to maintain the temperature in the crystallizer between about 140 degrees Fahrenheit (60°C) and about 180 degrees Fahrenheit (82,2222°C). In some embodiments, the one or more blowers are configured to blow hot air from a bottom portion of the crystallizer and draw air from an upper portion of the crystallizer.

### Stirring Apparatus

In various embodiments, the crystallizer comprises a stirring apparatus that comprises any suitable apparatus for stirring the PET flakes while the PET flakes are passing through the crystallizer. In various embodiments, the stirring apparatus may be operated, for example, by any suitable gear motor. In a particular embodiment, the stirring apparatus comprises a suitable rod or other suitable mechanism mounted to rotate, or otherwise stir the PET flakes as the PET flakes are passing through the crystallizer. In other embodiments, the stirring apparatus may comprise any suitable tumbler, which may, for example, comprise a drum mounted to rotate via the gear mother such that the PET flakes are at least partially stirred and/or agitated while the PET flakes are within the drum. In still other embodiments, the stirring apparatus comprises one or more screws and/or augers configured to rotate and stir the PET flakes. In particular embodiments, the stirring apparatus comprises the hopper screw.

As may be understood from this disclosure, the stirring apparatus is configured to agitate or stir the PET flakes as the one or more blowers blow air heated by the one or more heating elements across the PET flakes. In particular embodiments, the stirring apparatus is configured to at least partially reduce agglomeration (e.g., sticking or clumping of the flake) while the flake is at least partially crystallizing in the crystallizer.

According to the invention, the crystallizer at least partially dries the surface of the PET flakes. In various embodiments, the PET crystallizer is configured to reduce a moisture content of the PET flakes to about 50 ppm. In other embodiments the PET crystallizer is configured to reduce a moisture content of the PET flakes to between about 30 and about 50 ppm.

In various embodiments, the use of drier flakes may enable the system to run the flakes through the MRS extruder more slowly, which may allow for higher pressure within the MRS extruder during extrusion (e.g., may enable the system to maintain a higher pressure within the MRS extruder, rather than very low pressure).

In particular embodiments, the crystallizer causes the flakes to at least partially reduce in size, which may, for example, reduce a potential for the flakes to stick together. In particular embodiments, the crystallizer may particularly reduce stickiness of larger flakes, which may, for example, include flakes comprising portions of the ground PET bottles which may be thicker than other portions of the PET bottles (e.g., flakes ground from a threaded portion of the PET bottle on which a cap would typically be screwed).

### Use of Curbside Recycling v. Deposit Bottles in Process

In various embodiments, the system is configured to utilize recycled PET of varying quality in the process described above. For example, in various embodiments, the system is configured to produce bulked continuous carpet filament from PET derived from PET bottles sourced from curbside recycling sources (e.g., PET bottles that were collected as part of a general bulk recycling program or other recycling source) as well as deposit PET bottles (e.g., bottles returned as part of a deposit program). In various embodiments, Curbside recycled bottles may require more thorough processing in order to produce bulked continuous filament, as curbside recycled PET bottles may be mixed in with and otherwise include contaminants such as, for example: other recyclable goods (e.g., paper, other plastics, etc.), garbage, and other non-PET bottle items due to imperfect sorting of recycled goods or for any other reason. Deposit PET bottles may include PET bottles with fewer unwanted contaminants due in part because deposit PET bottles may be collected separately from other recyclable or disposable goods.

In various embodiments, curbside recycled PET bottles acquired during particular times of year may include more impurities and other contaminants than at other times of the year. For example, curbside recycled PET bottles collected during summer months may comprise a higher percentage of clear PET bottles (e.g., water bottles) at least in part due to additional water consumption during summer months.

In various embodiments, the system described above may be configured to adjust particular components of the process based at least in part on the source of recycled PET being used to produce the bulked continuous carpet filament. For example, because deposit PET bottles include fewer impurities that need to be removed during the initial cleaning and sorting phases of the process, the pressure regulation system may be configured to maintain a pressure within the MRS extruder that is higher than a pressure that it would be configured to maintain for PET flake derived from curbside recycled PET bottles. In a particular embodiment that does not form part of the invention, the pressure regulation system may be configured to maintain a pressure within the MRS extruder of between about 0 millibars and about 12 millibars when flakes derived from deposit PET bottles are passing through the MRS extruder. In still other excluded embodiments, the pressure regulation system may be configured to maintain a pressure within the MRS extruder of between about 5 millibars and about 10 millibars in such instances.

In various embodiments, the system is configured to determine a suitable pressure at which to maintain the pressure within the MRS extruder based at least in part on the source of the recycled PET. In other embodiments, the system is configured to omit one or more of the steps above or include one or more additional steps to the steps described above based at least in part on the source of the recycled PET.

### Direct Coupling of Various Process Components

### Direct Coupling ofMRS Extruder to Spinning Machine

According to the invention, the output of the MRS machine may be substantially directly coupled (e.g., directly coupled) to a spinning machine for forming the resulting molten polymer into bulked continuous filament. Thus, after the recycled PET polymer has been extruded and purified by the above-described extrusion process, the resulting molten recycled PET polymer is fed substantially directly (e.g., directly) into the spinning machine. This process may be advantageous because molten polymer does not need to be cooled into pellets after extrusion (as it would need to be if the recycled polymer were being mixed with virgin PET polymer) prior to spinning the molten polymer into filament. Not cooling the recycled molten polymer into pellets serves to avoid potential chain scission in the polymer that might lower the polymer's intrinsic viscosity.

### Direct Coupling ofNon-MRS Extruder to Spinning Machine

In various embodiments of the process for recycling PET (e.g., or other polymers) into BCF, the recycled PET flakes are passed through an extruder other than an MRS extruder (e.g., a "first extruder") prior to spinning the resultant molten polymer into BCF. According to the invention, the first extruder is substantially directly coupled (e.g., directly coupled) to the spinning machine (e.g., an outlet of the first extruder is substantially directly coupled to an inlet of the spinning machine). For example, an outlet of the first extruder is substantially directly coupled (e.g., via a suitable pipe, connector, etc.) to one or more inlets of one or more spinning machines. The first extruder comprises any suitable expanded surface area extruder. In various embodiments, the first extruder may include, for example, a twin screw extruder, a multiple screw extruder, a planetary extruder, or any other suitable extrusion system (e.g., any other suitable expanded surface area extruder). In various embodiments, the first extruder is any suitable extruder for increasing an amount of surface area of a polymer melt being extruded by the first extruder that is exposed to a low pressure within the first extruder (e.g., a low pressure caused by a pressure regulation system, such as any suitable pressure regulation system described above). In a particular embodiment, the first extruder is an MAS extruder manufactured by Maschinen und Anlagenbau Schulz GmbH of Pucking, Austria.

In various embodiments, the first extruder is a conical co-rotating twin screw extruder. In such embodiments, the first extruder comprises an extruder housing in which two, co-rotating conical screws are disposed (e.g., a first conical screw and a second conical screw). In various embodiments, each conical screw is substantially conical (e.g., conical) such that the screw narrows from a first diameter at a base end of each respective conical screw to a second diameter at a vertex end of each respective conical screw that is less than the first diameter. In various embodiments, each particular conical screw may have any suitable thread or threading. In some embodiments, each conical screw has a substantially uniform (e.g., uniform) thread pitch and thread crest along at least a portion of the conical screw. In other embodiments, thread pitch and crest may at least partially vary along a length of the particular conical screw. In still other embodiments, a difference between a major and minor diameter of the conical screw may vary along a length of the conical screw (e.g., the screw thread may be larger or smaller along particular portions of the conical screw). In a particular embodiment, the pitch of thread of a particular conical screw may decrease along the conical screw from the base portion to the vertex portion. In particular embodiments, the first and second conical screws are substantially structurally identical (e.g., structurally identical).

In particular embodiments, the two conical screws are oriented within the conical twin screw extruder such that the base portion of each screw is disposed adjacent an intake (e.g., inlet) of the conical twin screw extruder, and the vertex portion of each screw is disposed adjacent an outlet of the conical twin extruder. In particular embodiments, a central axis of the first conical screw forms an acute angle with the central axis of the second conical screw. In various embodiments, the first and second conical screws are disposed such that at least a portion of the thread of the first conical screw at least partially mates with (e.g., mates with) at least a portion of the thread of the second conical screw. In other embodiments, at least a portion of the thread of the first conical screw at least partially engages with (e.g., engages with) at least a portion of the thread of the second conical screw

In particular embodiments, the conical twin screw extruder may be configured to at least partially melt the plurality of flakes into a polymer melt. In such embodiments, the conical twin screw extruder may, for example, generate sufficient heat (e.g., via shearing) to at least substantially melt (e.g., melt) the flakes. In particular embodiments, the first extruder is configured to increase a surface area of the polymer melt. In various embodiments, the conical design of the conical twin screw extruder may result in an intake volume that is substantially greater (e.g., greater) than a discharge volume of the conical twin screw extruder. This higher intake volume, in various embodiments, may result in a high volume throughput per revolution of the twin conical screws. In various embodiments, the first extruder is configured to receive a plurality of polymer flakes (e.g., PET flakes) via a first extruder inlet, melt the plurality of flakes into a polymer melt while extruding the plurality of flakes, and pass the resulting polymer melt though an extruder outlet.

In accordance with the invention, the first extruder comprises a pressure regulation system configured to reduce a pressure within the first extruder. In a particular embodiment, the first extruder is fitted with a suitable vacuum pump such that the vacuum pump is in communication with an interior of the first extruder's housing via a suitable opening in the first extruder's housing. In still other embodiments, the first extruder is fitted with a series of vacuum pumps. In various embodiments, the low-pressure vacuum created by the vacuum pump in the first extruder may remove, for example: (1) volatile organics present in the melted polymer as the melted polymer passes through the first extruder; and/or (2) at least a portion of any interstitial water that was present in the wet flakes when the wet flakes entered the first extruder. In various embodiments, the low-pressure vacuum removes substantially all (e.g., all) of the water and contaminants from the polymer stream. In various embodiments, the vacuum pump may include any suitable vacuum pump, such as any vacuum pump described above or any other suitable vacuum pump.

In embodiments in which the system includes a first extruder directly coupled to the spinning machine, the process may include passing the plurality of flakes (e.g., a plurality of wet flakes after a washing step) through the first extruder to at least partially melt the plurality of flakes into a polymer melt and remove at least a portion of the impurities from the polymer melt. The polymer melt is then fed substantially directly (e.g., directly) into the spinning machine for spinning into bulked continuous carpet filament.

### Conclusion

Many modifications and other embodiments of the invention will come to mind to one skilled in the art to which this invention pertains having the benefit of the teachings presented in the foregoing descriptions and the associated drawings. For example, although the vacuum system discussed above is described as being configured to maintain the pressure in the open chambers of the MRS extruder to about 1 mbar, in other embodiments, the vacuum system may be adapted to maintain the pressure in the open chambers of the MRS extruder at pressures greater than, or less than, 1 mbar. Similarly, although various embodiments of the systems described above may be adapted to produce carpet filament from substantially only recycled PET (so the resulting carpet filament would comprise, consist of, and/or consist essentially of recycled PET), in other embodiments, the system may be adapted to produce carpet filament from a combination of recycled PET and virgin PET. The resulting carpet filament may, for example, comprise, consist of, and/or consist essentially of between about 80% and about 100% recycled PET, and between about 0% and about 20% virgin PET.

Also, while various embodiments are discussed above in regard to producing carpet filament from PET, similar techniques may be used to produce carpet filament from other polymers. Similarly, while various embodiments are discussed above in regard to producing carpet filament from PET, similar techniques may be used to produce other products from PET or other polymers.

In light of the above, it is to be understood that the invention is not to be limited to the specific embodiments disclosed and that modifications and other embodiments are intended to be included within the scope of the appended claims.

## Claims

1. A method of manufacturing carpet filament comprising the steps of:
(A) grinding a plurality of recycled PET bottles into a group of polymer flakes;
(B) washing said group of polymer flakes to remove at least a portion of one or more contaminants from a surface of said flakes, said group of flakes comprising a first plurality of flakes that consist essentially of PET and a second plurality of flakes that do not consist essentially of PET;
(C) after said step of washing said group of polymer flakes:
(i) scanning said washed group of flakes to identify said second plurality of flakes,
(ii) separating said second plurality of flakes from said first plurality of flakes;
(D) providing an expanded surface area extruder having an extruder inlet and an extruder outlet;
(E) providing a pressure regulation system configured to reduce a pressure within said expanded surface area extruder between about 0 mbar and about 5 mbar;
(F) providing a spinning machine having a spinning machine inlet, wherein said spinning machine inlet is directly coupled to said extruder outlet;
(G) using said pressure regulation system to reduce said pressure within said expanded surface area extruder between about 0 mbar and about 5 mbar;
(H) while maintaining said pressure within said expanded surface area extruder between about 0 mbar about 5 mbar, passing said second plurality of flakes through said expanded surface area extruder via said first inlet;
(I) melting said second plurality of flakes using said expanded surface area extruder to produce a polymer melt; and
(J) substantially immediately after passing said second plurality of flakes through said expanded surface area extruder, spinning said polymer melt into bulked continuous carpet filament using said spinning machine
**characterized in that** said method further comprises:
providing a PET crystallizer, wherein the PET crystallizer comprises one or more heating elements and one or more blowers configured to blow air that has been heated by the one or more heating elements over the second plurality of flakes as the second plurality of flakes pass through the crystallizer; and
prior to passing said second plurality of flakes through said expanded surface area extruder, passing said second plurality of flakes through said PET crystallizer to at least partially dry a surface of said second plurality of flakes, wherein the one or more blowers are moving air substantially across a surface area of the second plurality of flakes as the second plurality of flakes passes through the crystallizer.

2. The method of Claim 1, wherein said expanded surface area extruder is an extruder selected from a group consisting of:
i. a conical, co-rotating twin screw extruder; and
ii. a multi-rotating screw extruder.

3. The method according to any one of the proceeding claims, wherein smaller components and debris are removed from the plurality of recycled PET bottles via a rotating trammel, prior to the grinding step.

4. The method according to any one of the proceeding claims, wherein, prior to the grinding step, metals contaminants are removed from the plurality of recycled PET bottles using metal removing magnets or eddy current systems.

5. The method according to any one of the proceeding claims, wherein, prior to the grinding step, loose polymeric contaminants are removed from the plurality of recycled PET bottles using Near Infra-red optical sorting equipment

6. The method according to any one of the proceeding claims, wherein, prior to the grinding step, remaining PVC is removed from the plurality of recycled PET bottles using automated X-ray sorting equipment.

7. The method according to any one of the proceeding claims, wherein, after to the grinding step but before the washing step, bottle labels are removed from the flakes via an air separation system.

8. The method according to any one of the proceeding claims, wherein, during the washing step, an aqueous density separation is utilized to separate the olefin bottle caps from the higher specific gravity PET flakes.

9. The method according to any one of the proceeding claims, wherein, during the washing step, the flakes are washed in a heated caustic bath at about 190°F.

10. The method according to claim 9, wherein, during the washing step, the flakes are washed in a caustic bath with maintained concentration of sodium hydroxide between 0.6% and 1.2%.

11. The method according to any one of the proceeding claims, wherein the plurality of recycled PET bottles are sourced from curbside recycling sources.

12. The method according to any one of the claims 1 to 10, wherein the plurality of recycled PET bottles are sourced from returned deposit bottle sources.

13. The method according to any one of the proceeding claims, wherein said PET crystallizer comprises a housing, a hopper screw disposed at least partially within said housing and a stirring apparatus.

14. The method of claim 13, wherein said stirring apparatus is configured to agitate or stir the second plurality of flakes as the one or more blowers blow air heated by the one or more heating elements across the second plurality of flakes.

## Patentansprüche

1. Verfahren zur Herstellung von Teppichfilament, umfassend die Schritte:
(A) Mahlen einer Vielzahl von recycelten PET-Flaschen zu einer Gruppe von Polymerflocken;
(B) Waschen der Gruppe von Polymerflocken, um wenigstens einen Teil von einem oder mehreren Verunreinigungsstoffen von einer Oberfläche der Flocken zu entfernen, wobei die Gruppe von Flocken eine erste Vielzahl von Flocken, die im Wesentlichen aus PET bestehen, und eine zweite Vielzahl von Flocken, die nicht im Wesentlichen aus PET bestehen, umfasst;
(C) nach dem Schritt des Waschens der Gruppe von Polymerflocken:
(i) Abtasten der gewaschenen Gruppe von Flocken, um die zweite Vielzahl von Flocken zu identifizieren,
(ii) Trennen der zweiten Vielzahl von Flocken von der ersten Vielzahl von Flocken;
(D) Bereitstellen einer Extruders mit ausgedehnter Oberfläche, der einen Extrudereinlass und einen Extruderauslass aufweist;
(E) Breitstellen eines Druckregulationssystems, das dafür gestaltet ist, einen Druck in dem Extruder mit ausgedehnter Oberfläche zwischen etwa 0 mbar und 5 mbar zu verringern;
(F) Bereitstellen einer Spinnmaschine mit einem Spinnmaschineneinlass, wobei der Spinnmaschineneinlass direkt an den Extruderauslass gekoppelt ist;
(G) Verwenden des Druckregulationssystems zum Verringern des Drucks in dem Extruder mit ausgedehnter Oberfläche zwischen etwa 0 mbar und 5 mbar;
(H) unter Halten des Drucks in dem Extruder mit ausgedehnter Oberfläche zwischen etwa 0 mbar und 5 mbar Führen der zweiten Vielzahl von Flocken durch den Extruder mit ausgedehnter Oberfläche über den ersten Einlass;
(I) Schmelzen der zweiten Vielzahl von Flocken unter Verwendung des Extruders mit ausgedehnter Oberfläche, um eine Polymerschmelze zu erzeugen; und
(J) im Wesentlichen sofort nach dem Führen der zweiten Vielzahl von Flocken durch den Extruder mit ausgedehnter Oberfläche Spinnen der Polymerschmelze zu gebauschtem kontinuierlichem Teppichfilament unter Verwendung der Spinnmaschine,
**dadurch gekennzeichnet, dass** das Verfahren ferner umfasst:
Bereitstellen eines PET-Kristallisators, wobei der PET-Kristallisator ein oder mehrere Heizelemente und ein oder mehrere Gebläse, die dafür gestaltet sind, Luft, die von dem einen oder den mehreren Heizelementen erhitzt worden ist, über die zweite Vielzahl von Flocken zu blasen, während die zweite Vielzahl von Flocken durch den Kristallisator tritt, umfasst; und
vor dem Führen der zweiten Vielzahl von Flocken durch den Extruder mit ausgedehnter Oberfläche Führen der zweiten Vielzahl von Flocken durch den PET-Kristallisator, um eine Oberfläche der zweiten Vielzahl von Flocken wenigstens teilweise zu trocken, wobei das eine oder die mehreren Gebläse Luft im Wesentlichen über eine Oberfläche der zweiten Vielzahl von Flocken bewegen, während die zweite Vielzahl von Flocken durch den Kristallisator tritt.

2. Verfahren gemäß Anspruch 1, wobei der Extruder mit ausgedehnter Oberfläche ein Extruder ist, der ausgewählt ist aus der Gruppe bestehend aus:
i. einem konischen gleichlaufenden Doppelschneckenextruder; und
ii. einem Extruder mit multirotierender Schnecke.

3. Verfahren gemäß einem der vorstehenden Ansprüche, wobei vor dem Schritt des Mahlens kleinere Komponenten und Trümmer über eine Drehtrommel aus der Vielzahl von recycelten PET-Flaschen entfernt werden.

4. Verfahren gemäß einem der vorstehenden Ansprüche, wobei vor dem Schritt des Mahlens metallische Kontaminationsstoffe unter Verwendung von Metallentfernungsmagneten oder Wirbelstromsystemen aus der Vielzahl von recycelten PET-Flaschen entfernt werden.

5. Verfahren gemäß einem der vorstehenden Ansprüche, wobei vor dem Schritt des Mahlens lose polymere Verunreinigungsstoffe unter Verwendung einer optischen Nahinfrarot-Sortiereinrichtung aus der Vielzahl von recycelten PET-Flaschen entfernt werden.

6. Verfahren gemäß einem der vorstehenden Ansprüche, wobei vor dem Schritt des Mahlens verbleibendes PVC unter Verwendung einer automatisierten Röntgen-Sortiereinrichtung aus der Vielzahl von recycelten PET-Flaschen entfernt werden.

7. Verfahren gemäß einem der vorstehenden Ansprüche, wobei nach dem Schritt des Mahlens aber vor dem Schritt des Waschens Flaschenetiketten über ein Lufttrennsystem aus den Flocken entfernt werden.

8. Verfahren gemäß einem der vorstehenden Ansprüche, wobei während des Schritts des Waschens eine wässrige Dichtetrennung verwendet wird, um die Olefin-Flaschenkappen von den PET-Flocken mit höherer spezifischem Gewicht zu trennen.

9. Verfahren gemäß einem der vorstehenden Ansprüche, wobei während des Schritts des Waschens die Flocken in einem erhitzten kaustischen Bad mit etwa 190 °F gewaschen werden.

10. Verfahren gemäß Anspruch 9, wobei während des Schritts des Waschens die Flocken in einem kaustischen Bad mit bei zwischen 0,6 % und 1,2 % gehaltener Konzentration von Natriumhydroxid gewaschen werden.

11. Verfahren gemäß einem der vorstehenden Ansprüche, wobei die Vielzahl von recycelten PET-Flaschen aus Holsystem-Recyclingquellen gewonnen ist.

12. Verfahren gemäß einem der Ansprüche 1 bis 10, wobei die Vielzahl von recycelten PET-Flaschen aus Quellen von zurückgegebenen Pfandflaschen gewonnen ist.

13. Verfahren gemäß einem der vorstehenden Ansprüche, wobei der PET-Kristallisator ein Gehäuse, eine Füllschnecke, die wenigstens zum Teil innerhalb des Gehäuses angeordnet ist, und eine Rührvorrichtung umfasst.

14. Verfahren gemäß Anspruch 13, wobei die Rührvorrichtung dafür gestaltet ist, die zweite Vielzahl von Flocken zu bewegen oder zu rühren, während das eine oder die mehreren Gebläse von dem einen oder den mehreren Heizelementen erhitzte Luft über die zweite Vielzahl von Flocken bläst.

## Revendications

1. Procédé de fabrication d'un filament pour moquette, qui comprend les étapes de :
(A) broyer une multitude de bouteilles recyclées en PET pour obtenir un groupe de paillettes polymères ;
(B) laver ledit groupe de paillettes polymères dans le but d'éliminer au moins une portion d'un ou de plusieurs contaminants à partir d'une surface desdites paillettes, ledit groupe de paillettes comprenant une première multitude de paillettes qui sont constituées à titre essentiel de PET et une deuxième multitude de paillettes qui ne sont pas constituées à titre essentiel de PET ;
(C) après ladite étape de lavage dudit groupe de paillettes polymères :
(i) balayer ledit groupe de paillettes lavées dans le but d'identifier ladite deuxième multitude de paillettes ;
(ii) séparer ladite deuxième multitude de paillettes par rapport à ladite première multitude de paillettes ;
(D) procurer une extrudeuse du type à aire de surface élargie qui possède une entrée d'extrudeuse et une sortie d'extrudeuse ;
(E) procurer un système de régulation de la pression qui est configuré pour réduire une pression au sein de ladite extrudeuse du type à aire de surface élargie à une valeur qui se situe entre environ 0 mbar et environ 5 mbar ;
(F) procurer une machine de filature qui possède une entrée de machine de filature ; dans lequel ladite entrée de machine de filature est couplée directement à ladite sortie d'extrudeuse ;
(G) utiliser ledit système de régulation de la pression dans le but de réduire ladite pression au sein de ladite extrudeuse du type à aire de surface élargie à une valeur qui se situe entre environ 0 mbar et environ 5 mbar ;
(H) tout en maintenant ladite pression au sein de ladite extrudeuse du type à aire de surface élargie à une valeur qui se situe entre environ 0 mbar et environ 5 mbar, faire passer ladite deuxième multitude de paillettes à travers ladite extrudeuse du type à aire de surface élargie par l'intermédiaire de ladite première entrée ;
(I) mettre en fusion ladite deuxième multitude de paillettes en utilisant ladite extrudeuse du type à aire de surface élargie dans le but d'obtenir une masse fondue polymère ; et
(J) de manière essentiellement immédiate après le passage de ladite deuxième multitude de paillettes à travers ladite extrudeuse du type à aire de surface élargie, on soumet ladite masse fondue polymère à une filature dans le but d'obtenir un filament continu gonflant pour moquette en utilisant ladite machine de filature ;
**caractérisé en ce que** ledit procédé comprend en outre le fait de :
procurer un cristalliseur de PET ; dans lequel le cristalliseur de PET comprend un ou plusieurs éléments de chauffage et une ou plusieurs souffleries qui sont configurées pour souffler de l'air qui a été chauffé par lesdits un ou plusieurs éléments de chauffage par-dessus la deuxième multitude de paillettes au fur et à mesure du passage de la deuxième multitude des paillettes à travers le cristalliseur ; et
avant de faire passer ladite deuxième multitude de paillettes à travers ladite extrudeuse du type à aire de surface élargie, faire passer la deuxième multitude paillettes à travers ledit cristalliseur de PET dans le but d'obtenir un séchage au moins partiel d'une surface de la deuxième multitude de paillettes ; dans lequel lesdites une ou plusieurs souffleries déplacent de l'air essentiellement sur toute une aire de surface de la deuxième multitude de paillettes au fur et à mesure du passage de la deuxième multitude de paillettes à travers le cristalliseur.

2. Procédé selon la revendication 1, dans lequel ladite extrudeuse du type à aire de surface élargie représente une extrudeuse qui est choisie parmi un groupe constitué par :
i. une extrudeuse du type à deux vis coniques tournant dans la même direction ; et
ii. une extrudeuse du type à multiples vis rotatives.

3. Procédé selon l'une quelconque des revendications précédentes, dans lequel des composants plus petits et des débris sont retirés de la multitude de bouteilles recyclées en PET par l'intermédiaire d'un tambour rotatif, avant l'étape de broyage.

4. Procédé selon l'une quelconque des revendications précédentes, dans lequel, avant l'étape de broyage, des contaminants métalliques sont retirés de la multitude de bouteilles recyclées en PET en utilisant des aimants d'extraction de métaux ou des systèmes du type à courant de Foucault.

5. Procédé selon l'une quelconque des revendications précédentes, dans lequel, avant l'étape de broyage, des contaminants polymères en vrac sont retirés de la multitude de bouteilles recyclées en PET en utilisant un équipement de triage optique travaillant dans l'infrarouge proche.

6. Procédé selon l'une quelconque des revendications précédentes, dans lequel, avant l'étape de broyage, du PVC résiduel est retiré de la multitude de bouteilles recyclées en PET en utilisant un équipement de triage radiographique automatisé.

7. Procédé selon l'une quelconque des revendications précédentes, dans lequel, après l'étape de broyage, mais avant l'étape de lavage, des étiquettes de bouteilles sont retirées des paillettes par l'intermédiaire d'un système de séparation par air.

8. Procédé selon l'une quelconque des revendications précédentes, dans lequel, au cours de l'étape de lavage, on utilise une séparation basée sur la densité aqueuse dans le but de séparer les bouchons oléfiniques de bouteilles par rapport aux paillettes en PET qui possèdent une masse volumique supérieure.

9. Procédé selon l'une quelconque des revendications précédentes, dans lequel, au cours de l'étape de lavage, les paillettes sont lavées dans un bain caustique chauffé à une température d'environ 190 °F.

10. Procédé selon la revendication 9, dans lequel, au cours de l'étape de lavage, les paillettes sont lavées dans un bain caustique qui possède une concentration maintenue d'hydroxyde de sodium entre 0,6 % et 1,2 %.

11. Procédé selon l'une quelconque des revendications précédentes, dans lequel la multitude de bouteilles recyclées en PET proviennent de sources de collecte sélective.

12. Procédé selon l'une quelconque des revendications 1 à 10, dans lequel la multitude de bouteilles recyclées en PET proviennent de sources sous la forme de consignes récupérées.

13. Procédé selon l'une quelconque des revendications précédentes, dans lequel ledit cristalliseur de PET comprend un logement, une vis qui est munie d'une trémie qui est disposée au moins en partie au sein dudit logement, ainsi qu'un appareil d'agitation.

14. Procédé selon la revendication 13, dans lequel ledit appareil d'agitation est configuré pour agiter ou pour remuer la deuxième multitude de paillettes au fur et à mesure que lesdites une ou plusieurs souffleries soufflent de l'air, chauffé par lesdits un ou plusieurs éléments de chauffage, sur toute la deuxième multitude de paillettes.
